# EUROPEAN PATENT APPLICATION

(11) **EP 2 073 129 A2**
(43) Date of publication of application: **24.06.2009**
(21) Application number: 08018585.3
(22) Date of filing: 23.10.2008
(51) Int. Cl.: G06F 17/30

(54) **Application/data transaction management system and program for the same**

(30) Priority: 02.11.2007 JP 2007285895
(71) Applicant: Branddialog, inc, Chou-ku Tokyo 104-0045 (JP)
(72) Inventor: Moriya, Takehiro, Tokyo (JP)
(74) Representative: Höhfeld, Jochen

(57) **Abstract**

The present invention serves to produce good performances of the server side regardless of the increase or decrease in the data amount and enables to intercommunicate regardless of the difference in the data format of each client.

The application/data transaction management system 1A comprises an application/data transaction management system 1 of the administrator side, a resource provider terminal 2₁, ··· , 2ₙ, and a user terminal 4₁, ··· , 4ₖ etc. And the application/data transaction management system 1 of the administrator side has a web server 6, central server 7 etc. and communicates moving image file with the user terminal 4₁, ··· , 4ₖ, When a communication job is generated, web server 6 etc. determine the dividing aspects of the file in which the processing can be performed at a maximum speed and the computer resource to be processed, and sends the divided moving image file to the predetermined resource provider terminal 2₁, ··· ,2ₙ. The resource provider terminal 2₁, ··· ,2ₙ receives the file and performs conversion of the file format of each divided file simultaneously and in parallel.

## Description

### Background of the Invention

### Field of the Invention

This invention is related to a technology for recording and distributing data such as moving images, using grid computing system.

### Prior Art of the Invention

The development of a communication infrastructure e. g. Internet increases the need to exchange and distribute various data i. e. image data, sound data, text data (herein after referred to as simply "various data") and an application regarded as a program utilized when performing processing of various data at the computer (herein after referred to as simply "application"), over the internet.

To meet such demands, in a conventional art, there is known a system for creating a client server system via the internet and providing various data from the website created at the server side to the communication terminal such as personal computer at the client side. For example, refer to Patent Document 1: Japanese Patent Publication No. 2007-60032.

However, in such an invention described in the patent document 1, as the data amount of each various data and the number of communication terminal of the client increases, the burden on the server increases, thereby being difficult to maintain a good performance.

If a large sized electronic computer such as a super computer is used as a server, a good performance can be maintained under a relatively high burden condition.

However, the cost required to purchase and preserve such server would increasingly rise and server administrator would require higher professional knowledge for the maintenance and operation of the server side which would even increase the burden on the server administrator with such need.

On the other hand, an electronic computer such as a personal computer and a server computer used at an office or at home, are often activated in a specific limited time, for example, during daytime in weekdays, or a particular time during nighttime.

And if the burden mentioned in the patent document 1 imposed on the server increases while the electronic computers are being non-activated, it would decline the utilization rate of the computer resource.

### SUMMARY OF THE INVENTION

The present invention is made to solve the above-mentioned problems. An object of the present invention is to provide an application/data transaction management system, highly convenient for the user,
to increase the utilization of the computer resource,
to prevent the increase in the time and cost required to purchase and control (manage) the server,
to maintain good performance of a server side regardless of the increase or decrease in the data amount and
to communicate various data regardless of the difference in the data format which can be used for each client.

In view of the foregoing, the present invention relates to an application/data transaction management system for creating a grid computing system and communicating various data between the user terminals used by the users for using the various data via the network comprising;
a central server for communicating with the resource provider terminal via the network, and controlling the operating condition of the predetermined configuration requirement which constitutes the system,
a database in which various data are stored,
application control means for controlling the type of application applied to the various data, and
data conversion/selection means for converting the data format of the various data into multiple data formats when the application/data transaction management system receives the various data from the user terminals and selecting the various data in a data format which conforms to the application registered in the user terminal when there is a request for acquiring various data from the user terminals to the application/data transaction management system.

Another aspect of the present invention is that the system further comprises;
resource control means for controlling the operational status of the resource provider terminal which performs a predetermined processing of at least either one of the various data or application and controlling the computer resource conditions.

Another aspect of the present inventions is that the system further comprises;
resource analysis selection means for analyzing information such as operational status of each resource provider terminal and computer resource condition when the various data is divided and each divided various data is processed separately at the multiple resource provider terminals and selecting the resource provider terminal to which said various data are processed based on the result of the analysis and
data dividing means for dividing the various data based on the analysis of the resource analysis selection means and transmitting the divided various data to the multiple resource provider terminals selected by the resource analysis selection means.

Another aspect of the present invention is that the resource analysis selection means is configured to divide the various data and to select the resource provider terminal so that the processing time of various data will be minimized as much as possible.

Another aspect of the present invention is that the recourse analysis selection means is configured to collate the conditions such as type of various data, amount of data, with the computer resource conditions of each resource provider terminal and to select the resource provider terminal so that the processing time will be minimized as much as possible as a result of the collation.

Another aspect of the present invention is that the various data is a moving image file and the application performs the encoding of the moving image file.

Another aspect of the present invention is to form at least either of one of e-market places, an e-market place for making the computer resource of a specific resource provider terminal to be utilized by a specific user terminal for a certain prescribed period, or an e-market place for making the application which is used in the user terminal to be utilized for a certain prescribed period.

Another aspect of the present invention is to provide a program to make a computer function as an application/data transaction management system according to claims 1 to 7.

According to the present invention described above, the system comprises a central server for communicating with the resource provider terminal over the network to control the operating condition of the predetermined configuration requirement which constitutes the system and creates a grid computing system and communicates various data between the user terminals used by the user who uses various data over the network. Accordingly, under the control of the central server, non-activated electronic computer at an office or at home can be utilized as a resource provider terminal so that the large amount of data can be processed with high speed. Thereby, the increase in time and cost for purchasing and controlling the server can be prevented, being able to preserve good performance of the server side regardless of the increase or decrease in the data amount.

In addition, the application control means controls the type of application to be applied to each various data, thereby, being able to utilize various data regardless of whether the application is mounted or not on a user terminal.

Further, this system comprises data conversion/selection means for converting the data format of the various data into multiple data formats when the application/data transaction management system receives the various data from the user terminal and selecting the various data in a data format which conforms to the application registered in the user terminal when there is a demand for acquiring various data from the user terminal to the application/data transaction management system. Accordingly, even when the various data subjected to the acquisition demand from a specific user terminal, has a data format different from the data format that can be used at the relevant user terminal, the various data can still be utilized at the relevant user terminal. Thereby, various data can be communicated regardless of the difference in the data format in which each client can use, being able to provide an application/data transaction management system, convenient for the user.

In accordance with another aspect, a resource control means controls the operational status of the resource provider terminal and the computer resource condition so that a resource provider terminal having a computer resource suitable for performing the processing of the various data and application which are currently activated, can be selected, thereby, being able to increase the utilization rate of the computer resource, and preserving better performance of the server side.

In accordance with another aspect, the resource analysis selection means analyzes information such as operational status of each resource provider terminal and computer resource condition and selects the resource provider terminal in which said various data are to be processed based on the result of the analysis and
data dividing means divides the various data based on the analysis of the resource analysis selection means and transmits the divided various data to the multiple resource provider terminals.

Accordingly, the parallel processing of the various data divided at a resource provider terminal suitable for various data processing can be realized, and the processing of the various data can be performed promptly and accurately, being able to enhance the operation of the computer resource, and better performance of the server side can be maintained.

In accordance with another aspect, the resource analysis selection means is configured to divide the various data and select the resource provider terminal so that the processing time of various data will be minimized as much as possible. Accordingly, the processing of the various data can be performed promptly and accurately, being able to enhance the operation of the computer resource and good performance of the server side can be further maintained.

In accordance with another aspect, the resource analysis selection means is configured to collate the conditions such as type of various data, amount of data etc. with the computer resource conditions of each resource provider terminal and to select the resource provider terminal so that the processing time will be minimized as much as possible as a result of the collation. Accordingly, the processing of the various data can be performed promptly and accurately under a condition where there is a good compatibility between the various data and the computer resource condition.

In accordance with another aspect, the various data is a moving image file and the application performs the encoding of the moving image file. Accordingly, a prompt and an accurate processing can also be realized in a moving image file which often has an increased processing amount as the data amount increases, being able to enhance the usage of the computer resource, and to further preserve good performance of the server side.

In accordance with another aspect, at least either one of e-market places is formed, an e-market place for making the computer resource of the specific resource provider terminal to be used by the specific user terminal for a prescribed time period, or an e-market place for making the application used by the user terminal to be used for a prescribed time period. Accordingly, an environment which matches the needs of the user who prefer to use the large amount of computer resource for a prescribed time period, or user who prefer to use specific application only for a prescribed time period can be easily established, being able to increase the utilization of the computer resource, and further maintaining good performance of the server side.

In accordance with another aspect, the application/data transaction system of this present invention can be programmed and can be realized on various computer hardware.

### BRIEF DESCRIPTION OF THE DRAWINGS

FIG. 1 illustrates a system configuration of an application/data transaction management system of the present embodiment.
FIG. 2 illustrates a functional block diagram of the web server of the above-mentioned application/data transaction management system.
FIG. 3A illustrates a functional block diagram of a central server and FIG 3B illustrates a functional block diagram of the resource provider terminal, of the above-mentioned application/data transaction management system.
FIG 4 illustrates a functional block diagram of the database of the above-mentioned application/data transaction management system.
FIG. 5 illustrates a schematic diagram of the data structure of the user information recorded in the above-mentioned database.
FIG. 6A illustrates a schematic diagram of the data structure of the charging information recorded in the above-mentioned database, FIG. 6B illustrates a schematic diagram of a data structure of the file control information recorded in the database, FIG. 6C illustrates a schematic diagram of a data structure of the application control information recorded in the database.
FIG. 7A illustrates a schematic diagram of a data structure of the job control recorded in the database and FIG. 7B illustrates a schematic diagram of a data structure of the resource control information recorded in the database.
FIG. 8A illustrates a schematic diagram of the data structure of the administrator information recorded in the database, FIG. 8B illustrates a schematic diagram of the system log information recorded in the database.
FIG. 9 illustrates a schematic diagram of the data structure of an e- market place information recorded in the database.
FIG. 10 illustrates an image view of the registration screen displayed at the display section of the user terminal.
FIG. 11 is a flow chart showing the procedures for uploading the application which is owned by the application provider to the application/data transaction management system of the administrator side.
FIG. 12 is an image view of the uploaded result display screen displayed at the display section of the application provider terminal.
FIG. 13 is a flow chart showing procedures for registering personal computer etc. which resource provider owns and controls, as a resource provider terminal.
FIG. 14A is an image view of the registration information display screen displayed at the display section of the resource provider terminal, and FIG. 14B is an image view of the operating history display screen displayed at the display section of the resource provider terminal.
FIG. 15 is an image view of the login screen displayed at the display section of the user terminal.
FIG. 16A is an image view of the charging history display screen displayed at the display section of the user terminal and FIG. 16B is an image view of the charging detail information displayed at the display section of the user terminal.
FIG. 17 is a flowchart showing user procedures for uploading a moving image file.
FIG. 18 is an image view of the uploaded result display screen displayed at the display section of the user terminal.
FIG. 19 is a flowchart showing user procedures for performing a job at the user terminal.
FIG. 20 is an image view of the job registration screen displayed at the display section of the user terminal.
FIG. 21 is an image view showing a job completion display screen displayed at the display section of the user terminal.
FIG. 22 is a flow chart showing procedures of job execution.
FIG. 23 is an image view of the registration content confirmation screen displayed at the display section of the resource provider terminal.
FIG. 24 is an image view of the registration content confirmation screen displayed at the display section of the user terminal.
FIG. 25 is an image view of the registration condition display screen displayed at the display section of the user terminal.
FIG. 26 is an image view of the registration condition display screen displayed at the display section of the resource provider terminal.

### DETAILED DESCRIPTION

First embodiment of the present invention will be described hereunder with reference to the accompanying drawings.

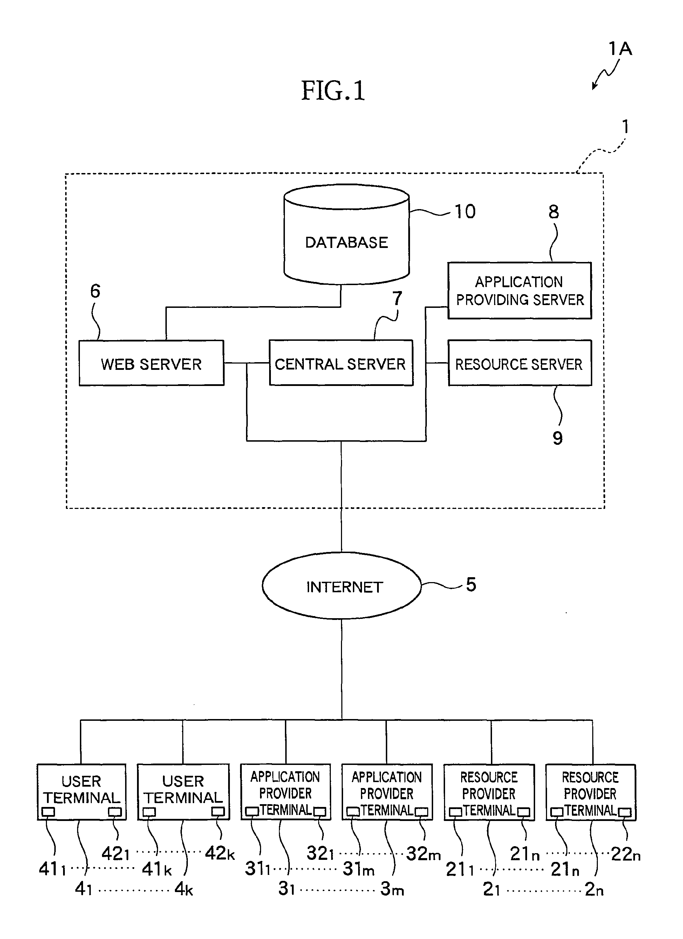

Fig. 1 illustrates a system configuration of an application/data transaction management system 1A of the present embodiment. As shown in Fig. 1, an application/data transaction management system 1A is a grid computing system comprising an application/data transaction management system 1 of an administrator side, a resource provider terminal 2₁, · · ·, 2ₙ of n units (n ≧1), an application provider terminal 3₁, · · ·, 3ₘ of m units (m≧1) and a user terminal 4₁, · · ·, 4ₖ of k units (k ≧ 1) which all intercommunicate via an Internet 5 regarded as WAN (Wide Area Network).

The application/data transaction management system 1 of an administrator side is a computer system in which a moving file regarded as "various data" is transmitted between the users of user terminal 4₁, · · · , 4ₖ ,and the moving file is owned and controlled by an enterprise controlling an e-market place of the user terminal 4₁, · · · , 4ₖ. The system also comprises a web server 6, a central server 7, an application providing server 8, resource server 9 and a database 10.

The web server 6 transmits information such as moving image data, sound data etc. to the user terminal 4₁, · · · , 4ₖ under the control of the central server 7.

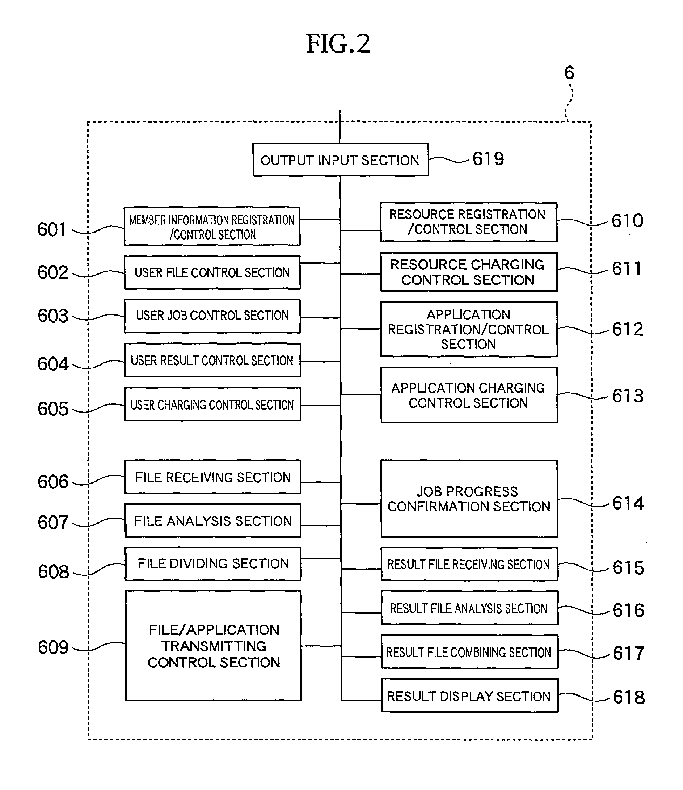

Fig. 2 is a functional block diagram of the web server 6. As shown in Fig. 2, the Web server 6 comprises, as functional means to be realized using an application/data transaction management system 1A,
a member information registration/control section 601 for registering information of
a user who sends and receives various data by manual processing or by automatic processing using a program etc. (herein after referred to as simply "user");
an application provider who provides application by manual processing or by automatic processing using a program etc. (herein after referred to as simply "application provider");and
a resource provider(herein after referred to as simply "resource provider"), who provides computer resource (computer resource is a generic term used for CPU constituting the relevant computer and memory such as RAM, ROM, HDD etc. likewise, used in this specification.) by manual processing or by automatic processing using the computer etc.;
a user file control section 602 for controlling the sending and receiving of the file by the user;
a user job control section 603 for controlling the job regarded as a unit of processing performed by the user (hereinafter referred to as simply "job");
a user result control section 604 for controlling a result of the usage of a system by the user;
a user charging control section 605 for controlling a charging condition of the user;
a file receiving section 606 for receiving a moving image file transmitted from the user terminal 4₁, · · · , 4ₖ;
a file analysis section 607 for performing an analysis of data format and data amount etc. of the moving image file;
a file dividing section 608 as a " data dividing means" for dividing the moving image file;
a file/application transmission control section 609 for sending the moving image file and the application to the central server 7;
a resource registration/control section 610 for acquiring information from the resource information acquiring section (described later) of the central server 7;
a resource charging control section 611 for controlling information of the payment incurred at the time when resource provider terminal 2₁, · · · , 2ₙ is being used (It is a user fee to be paid to the resource provider who owns the resource provider terminal 2₁, · · · , 2ₙ);
an application registration/control section 612 as an "application control means" for controlling the application type which can be applied to the moving image file and the registered application type for each user terminal 4₁, · · · , 4_{k;}
an application charging control section 613 for controlling information of the payment incurred at the time when the application is being used (It is a user fee to be paid to the application provider);
a job progress confirmation section 614 for controlling the progress of the job performed in the resource provider terminal 2₁, · · · , 2ₙ;
a job result file receiving section 615 for receiving a file as a result of the execution in the resource provider terminal 2₁, · · · , 2ₙ;
a result file analysis section 616 for analyzing a file received by the job result file receiving section 615;
a result file combining section 617 for combining multiple files received from the multiple resource provider terminal 2₁, · · · , 2ₙ into one file;
a result display section 618 for sending a result of the job execution to the user terminal 4₁, · · · , 4ₖ and displaying; and
an output/input section 619 as a communication interface.

The file analysis section 607 further comprises "data conversion/selection means" for storing a data format of the moving image file available at the user terminal 4 which is converted into multiple moving image file formats, into data base 10, and selecting the moving image file in the form of data format available at the user terminal 4 from the multiple moving image files in the data format stored in the database.

A central server 7 communicates with the resource provider terminal 2₁, ···, 2ₙ via the Internet 5 and controls the operational status of the entire application/data transaction management system 1A.

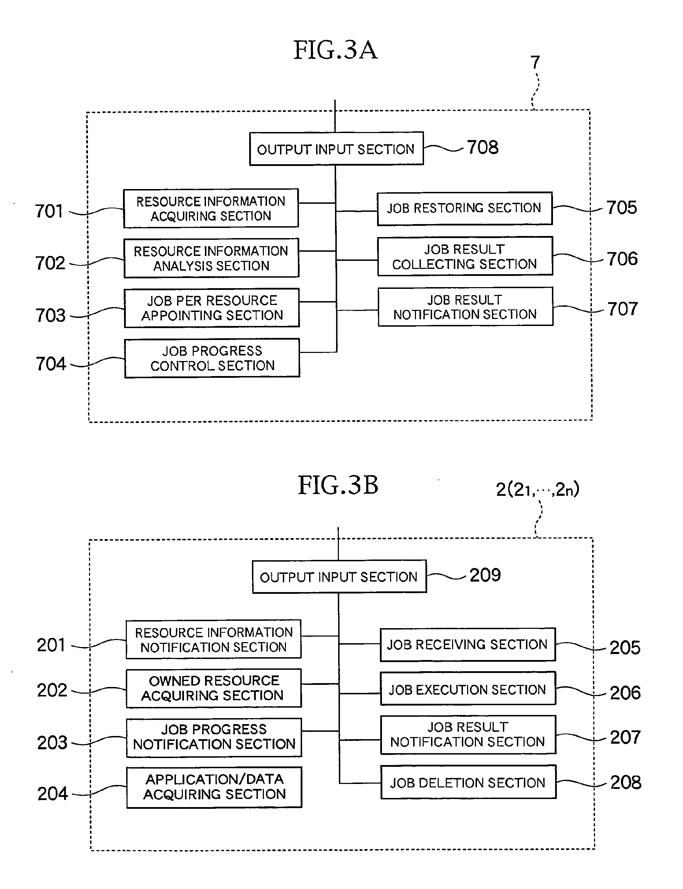

Fig. 3A is a functional block diagram of the central server 7. As shown in Fig. 3A, the central server 7, as functional means which can be realized by the program execution, comprises;
a resource information acquiring section 701 as "resource control means" for acquiring and controlling information of the condition of the computer resource (A CPU specifications, memory size of RAM, ROM, HDD etc.) of each resource provider terminal 2₁, · · · , 2ₙ;
a resource information analysis section 702 as "resource analysis selection means" for analyzing information such as operational status of each above-mentioned resource provider terminal and computer resource condition when dividing the moving image file and performing the processing of each divided moving image file in the multiple resource provider terminals 2;
a job per resource appointing section 703 as "resource analysis selection means" for selecting resource provider terminal 2 which performs processing of the moving image file based on the analysis result of the resource information analysis section 702;
a job progress control section 704 for instructing and controlling the acquiring of the job progress status in the computer resource;
a job restoring section 705 for instructing and controlling the restoration of the job when the relevant job is suspended;
a job result collecting section 706 for instructing and controlling the acquiring of the result of the completed job;
a job result notification section 707 for instructing and controlling of notifying the job result from the web server 6 to the user terminal 4_{1,} ···, 4ₖ ;and
an output/input section 708 as a communication interface.

A resource provider terminal 2₁, ···, 2ₙ represent a personal computer or a server computer used at an office, at a local government, at a university, or at home etc. or an electronic computer of a server computer etc. and performs various processing under the control of the central server 7.

Each resource provider terminal 2₁, ···, 2ₙ comprises
an operation section 21₁, ···, 21ₙ i.e. a mouse or a keyboard etc. used for inputting various instruction; and
a display section 22₁, ···, 22ₙ which is made of LCD (Liquid Crystal Display) for displaying various instructions and various images inputted from the operation section 21₁, ···, 21ₙ.

The resource provider terminal 2₁, ···, 2ₙ, the operation section 21₁, ···, 21ₙ and the display section 22₁, ···, 22ₙ all have the same configuration, therefore, hereunder, they are referred to as a resource provider terminal 2, an operation section 21 and a display section 22 respectively unless there is a specific need to be distinguished.

Fig. 3B is a functional block diagram of the resource provider terminal 2. As shown in Fig. 3B, the resource provider terminal 2, as a functional means which is formed by a program execution comprises;
a resource information notification section 201 for notifying its own computer resource based on a request from the web server 6;
an owned resource acquiring section 202 for acquiring its own computer resource and an application to be used;
a job progress notification section 203 for notifying the progress of its own job performed based on a request from the web server 6;
an application/data acquiring section 204 for acquiring its own computer resource and its own application to be used, which are provided from the web server 6;
a job receiving section 205 for receiving a job provided from the web server 6;
a job execution section 206 for executing the received job;
a job result notification section 207 for notifying the result of the job execution to the web server 6;
a job deletion section 208 for deleting the completed job; and
an output/input section 209 as a communication interface.

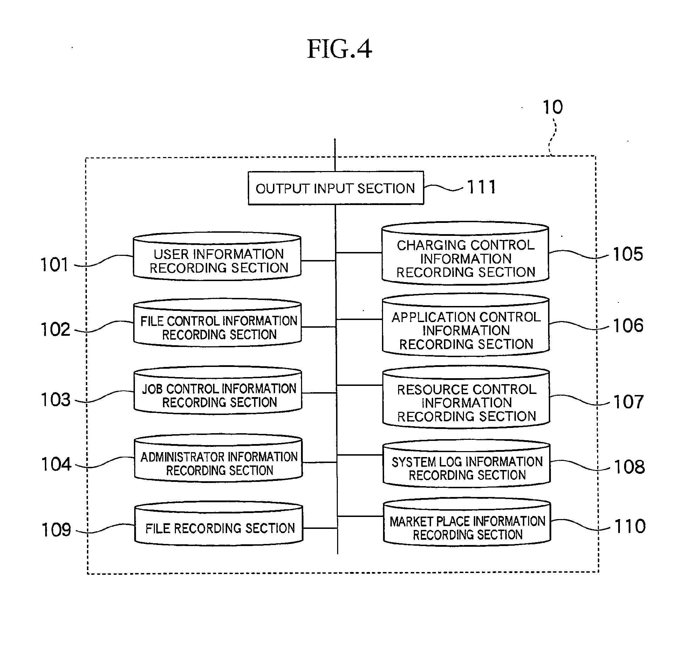

In the database 10, various data are stored. Fig. 4 illustrates a functional block diagram of the database 10. As shown in Fig. 4, the database 10 comprises a user information recording section 101, a file control information recording section 102, a job control information recording section 103, administrator information recording section 104, a charging control information recording section 105, an application control information recording section 106, a resource control information recording section 107, a system log information recording section 108, a file recording section 109, a market place information recording section 110 and an output input section 111 as a communication interface.

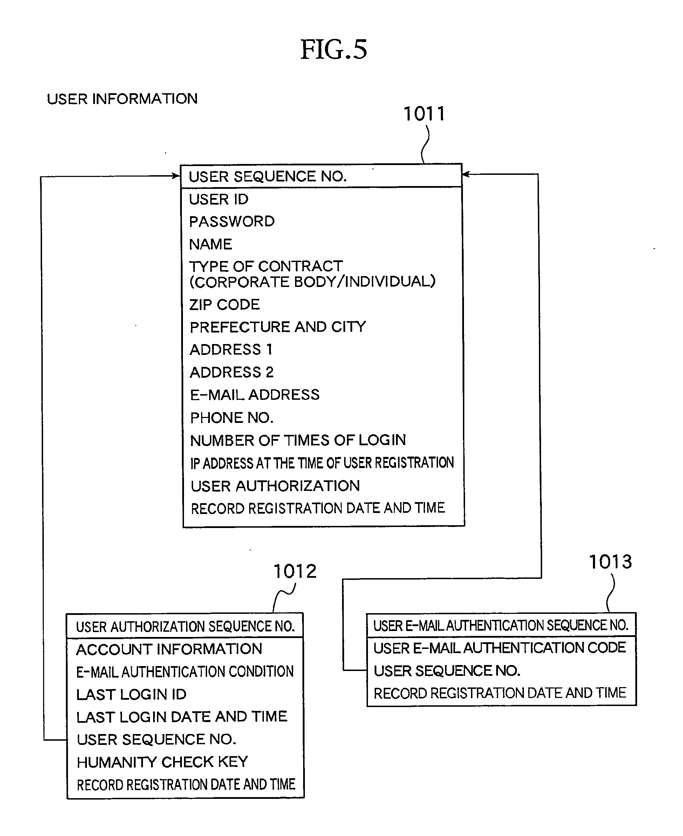

Inside the database 10, various data are stored. Fig. 5 is a schematic diagram showing the data structure of the user information recorded in the user information recording section 101. As shown in Fig. 5, a user information comprises information 1011 i.e. a user ID, password, address and name etc. identifying the individual user, information 1012 i.e. account information, log-in condition etc. showing condition of the system utilization of each user, and an e-mail authentication information 1013 having an e-mail authentication code for each user, and each information 1011, 1012, 1013 is being uniquely numbered with a user sequence number, user authorization sequence number and user e-mail authentication sequence number respectively, and recorded.

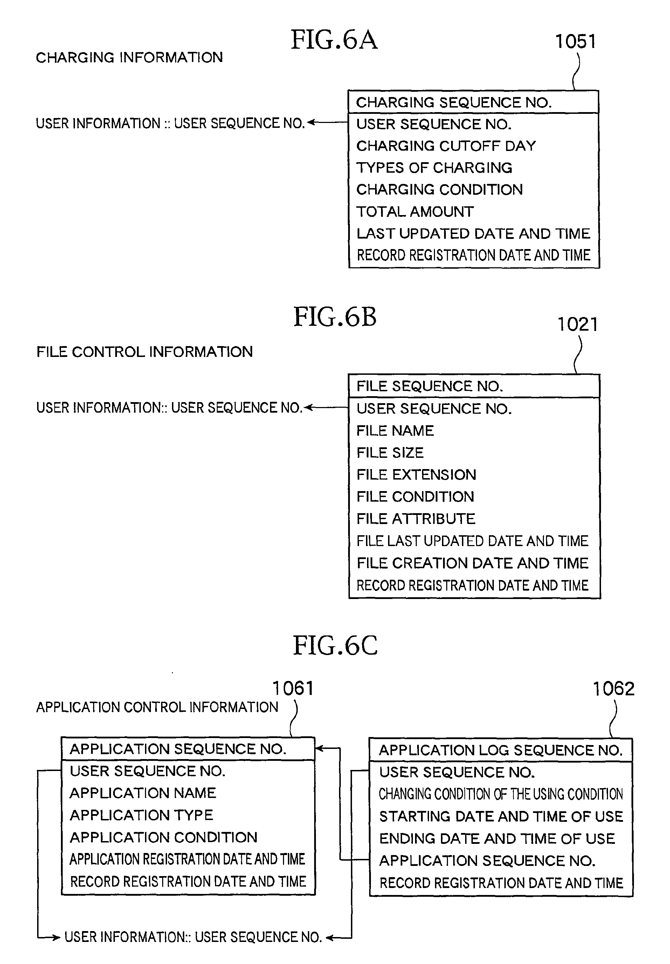

Fig. 6B illustrates a schematic diagram of the data structure of the file control information recorded in the file control information recording section 102. As shown in the same figure, user information i.e. file name, file size, file extension, file condition, file attribute etc. for recording the condition of each file, is recorded, being uniquely numbered with a file sequence number 1021.

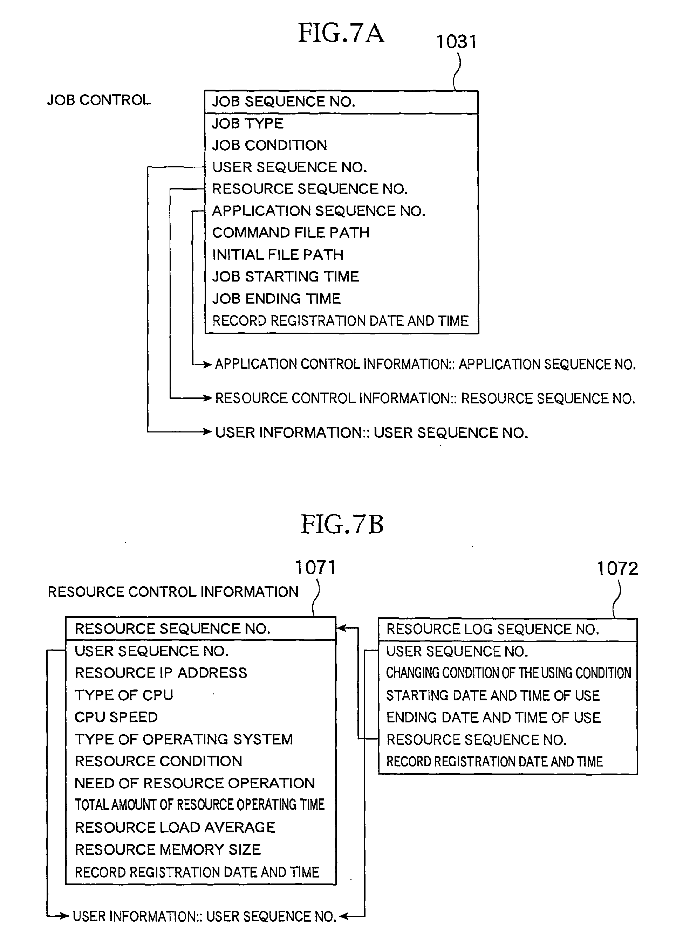

Fig. 7A illustrates a schematic diagram of the data structure of a job control information recorded in the job control information recording section 103. As shown in Fig. 7A, job control information i.e. job type, job condition, job starting time, job ending time etc. referred to as information 1031 for recording the condition of each job is being uniquely numbered with a job sequence number, and recorded.

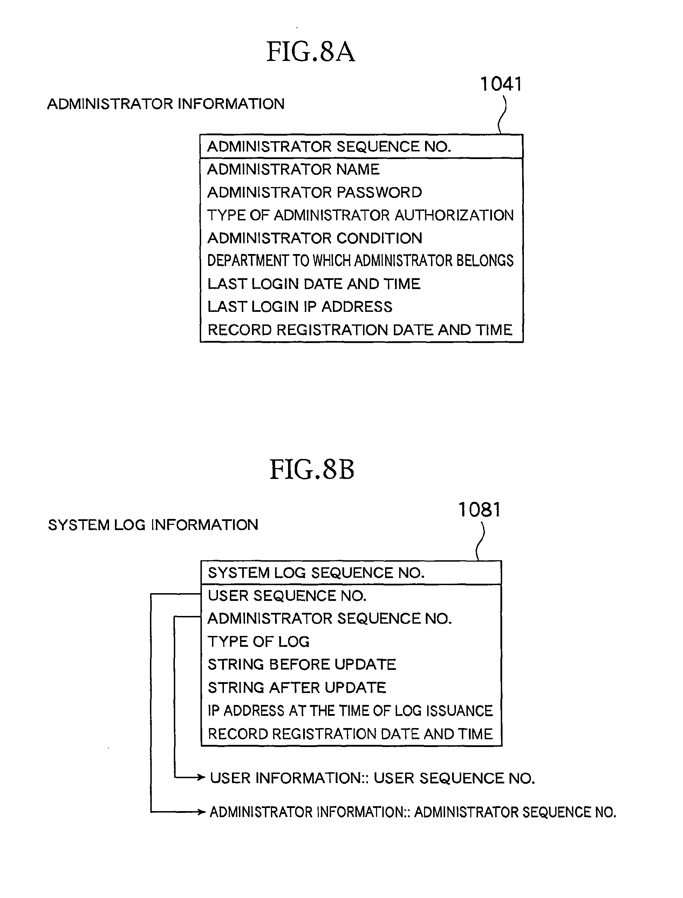

Fig. 8A is a schematic diagram of a data structure of administrator information recorded in the administrator information recording section 104. In Fig.8A, administrator information such as administrator name, administrator password, a department to which the administrator belongs etc. are referred to as information 1041 and is uniquely numbered with an administrator sequence number and recorded.

Fig. 6A is a schematic diagram showing a data structure of a charging information recorded in the charging control information recording section 105. In Fig. 6A, charging information referred to as information 1051 are information related to the charging of each individual user such as charging cutoff day, charging type and condition, total amount etc. and information related to the fees to be paid to each application provider/resource provider, is recorded, being uniquely numbered with a charging sequence number.

Fig. 6C is a schematic diagram showing a data structure of an application control information recorded in the application control information recording section 106. As shown in Fig. 6C, an application control information, referred to as information 1061 is an information related to each individual application itself such as application name, application type, conditionetc. and information 1062 is an information related to a using history of each individual application such as starting date and time, ending date and time etc. Information 1061 and 1062 are each uniquely numbered with an application sequence number and an application login sequence number, respectively and recorded.

Fig. 7B is a schematic diagram showing a data structure of a resource control information recorded in the resource control information recording section 107. As shown in Fig. 7B, resource control information, referred to as information 1071 is an information related to the computer resource of each resource provider terminal 2, i.e. types and speed of CPU, types of Operating System, memory size of RAM, ROM, HDD etc. and information 1072 is an information related to the using history of each resource provider terminal. Information 1071 and 1072 are each uniquely numbered with a resource sequence number and resource log sequence number, respectively and recorded.

Fig. 8B is a schematic diagram of a data structure of a system log information recorded in the system log information recording section 108. As shown in same figure, system log information referred to as log information 1081 of a system, such as log types, pre-update information and after-update information etc. are recorded, being uniquely numbered with a system log sequence number.

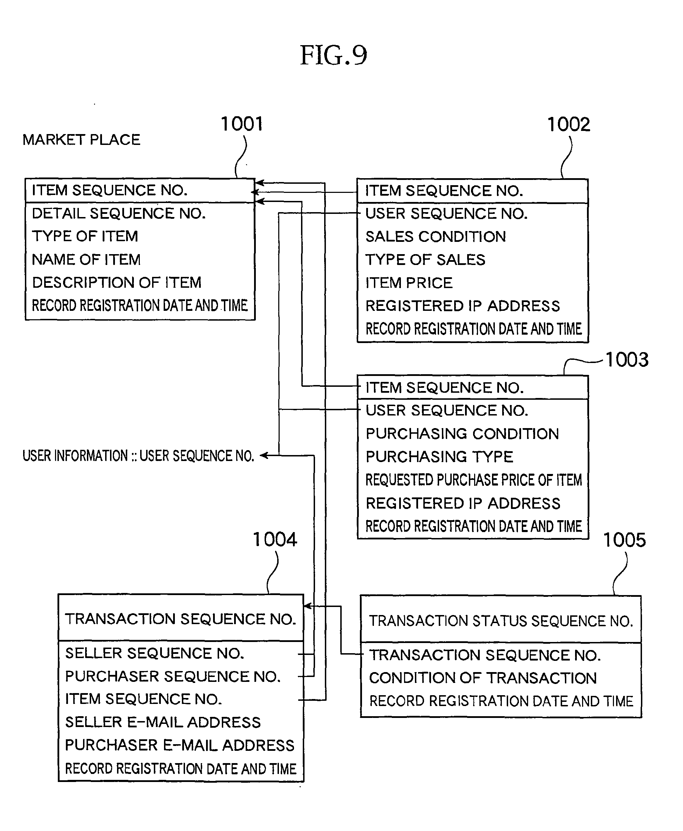

Fig. 9 is a schematic diagram showing a data structure of a market place information recorded in the market place information recording section 110. As shown in Fig. 9, market place information comprises, market information 1001 for identifying types and names of the items intended for transaction in the marketplace (As described later, in the present embodiment, these items correspond to the exclusive license of computer resource of a specific resource provider terminal 2 for a prescribed period, the right of use of the application, and the right of use of the memory space of RAM, ROM, HDD etc.), information 1002 for identifying sales items information for the user, information 1003 for identifying purchasing condition of the items from the user, information 1004 for identifying the transaction of sale and purchase, and information 1005 for identifying transaction condition. Information 1001, 1002, 1003, 1004, 1005 are each uniquely numbered with an item sequence number, an item sequence number, an item sequence number, a transaction sequence number and a transaction status sequence number, respectively, and recorded.

As shown in Fig. 1, an application provider terminal 3₁, ···, 3ₘ and an user terminal 4₁, ···, 4ₖ represent an electronic computer of a personal computer at an office, at local government, at university or at home etc. or a server computer etc. and comprise operation section 31₁, ···, 31ₘ, 41₁, ···, 41ₖ and display section 32₁, ···, 32ₘ, 42₁, ···, 42ₖ, likewise the operation section 21 and display section 22 of the resource provider terminal 2. The application provider terminal 3₁, ···, 3ₘ provides various application used in the user terminal 4₁, ···, 4ₖ, for example, an application used to perform the encoding of the moving image file. The user terminal 4₁, ···, 4ₖ, makes access to the application/data transaction management system 1 of the administrator side via the Internet 5 and is utilized by the user who uses the various data. The user terminal 4₁, ···, 4ₖ can be a portable communication terminal such as PDA, cell-phone etc.

An application providing server 8 has a similar structure and similar function as that of the application provider terminal 3₁, ···, 3ₘ and a resource server 9 has a similar structure and similar function as that of the resource provider terminal 2₁, ···, 2ₙ. Therefore, the application and the computer resource can be selectively acquired within and outside the application/data transaction management system 1 of the administrator side.

The application provider terminal 3₁, ···, 3ₘ, the user terminal 4₁, ···, 4ₖ, the operation section 31₁, ···, 31ₘ, 41₁, ···, 41ₘ and display section 32₁, ···, 32ₘ, 42₁, ···, 42ₘ all have the same structure, therefore, they are hereunder simply referred to as an application provider terminal 3, a user terminal 4, an operation section 31,an operation section 41, a display section 32 and a display section 42, respectively, unless there is a specific need to be differentiated.

Next, an operation of the embodiment of the present invention will be explained.

### < Registration of user etc.>

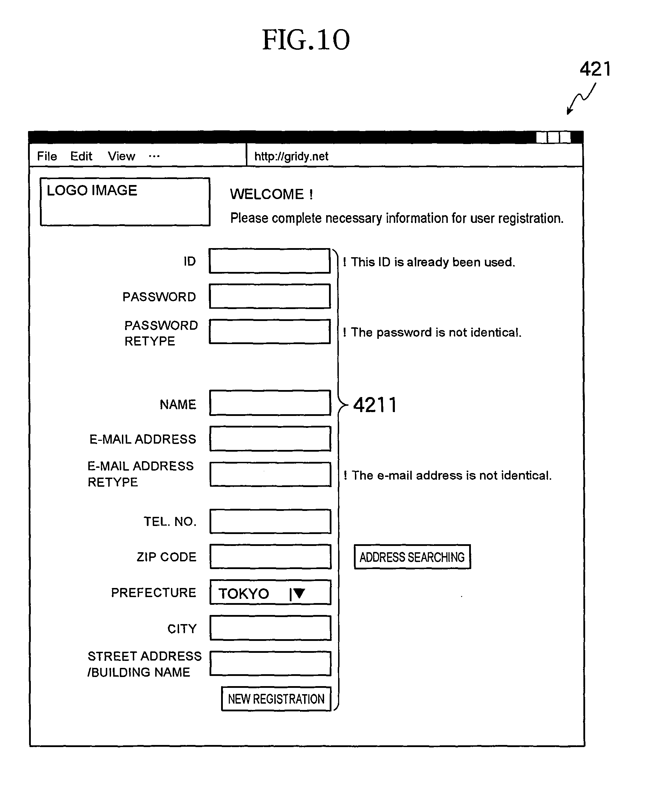

Using the user terminal 4, a user makes access to the web server 6 of the application/data transaction management system 1 of the administrator side to display the registration screen 421 shown in the image view of Fig. 10 on the display section 42. Then, the user inputs necessary information such as ID, password, name, e-mail address, telephone number, address etc. on the input column 4211. After the input is completed, the users click the completion button (not shown) and apply for pre-registration and the confirmation e-mail will be sent to the user terminal 4. And, the pre-registered information will be recorded in the user information recording section 101 of the database 10. The ID is set with a deadline, and a member information registration/control section 601 manages and handles this deadline. Then, user must perform the necessary procedures within the set deadline to apply for the real (full) registration, and when the necessary procedures are properly completed, member information registration/control section 601 will accept the registration, and the full registered information will be recorded in the user information recording section 101 of the database 10. Similarly, the application provider and resource provider uses application provider terminal 3 and resource provider terminal 2 to apply for registration. The registered information is recorded in the application control information recording section 106 and resource control information recording section 107.

### <Registration of application>

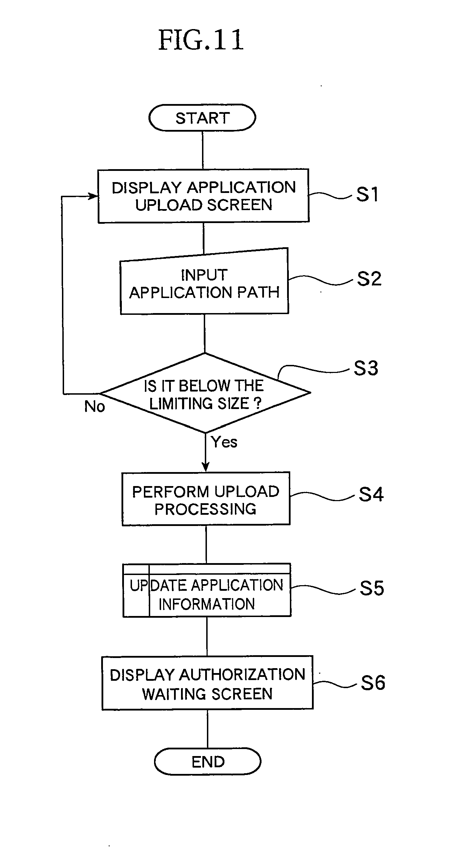

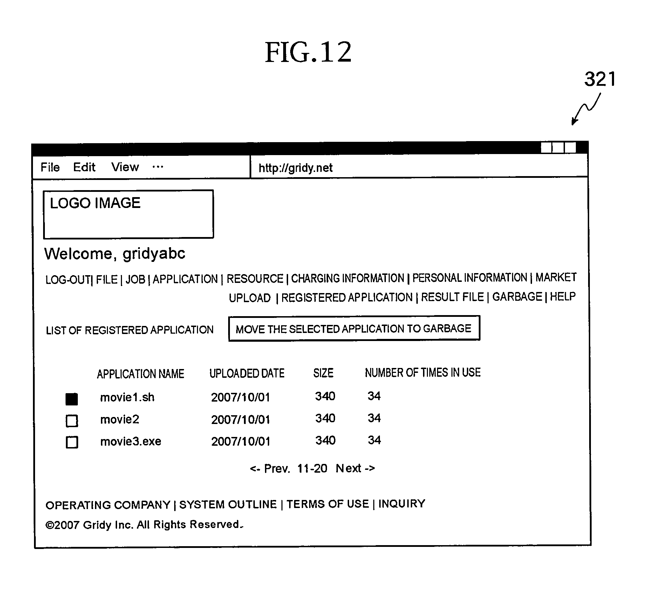

Fig. 11 is a flow chart explaining the procedures of an application provider for uploading ones owned application to the application/data transaction management system 1 of the administrator side. As shown in Fig. 11, when the application provider uploads the application which is used for replaying the moving image file in the user terminal 4, to the application/data transaction management system 1 of the administrator side, upload screen (not shown) is displayed on the display section 32 of the application provider terminal 3, and path information for the storage location of the application is inputted on the input column (not shown) of the upload screen (not shown) (Step S2). The size information etc. of the application is sent to the web server 6, and application registration/control section 612 confirms as to whether the size of the relevant application is within the prescribed limiting size. If the size of the relevant application exceeds the limiting size ("No" at Step S3), it is accordingly shown on the upload screen (not shown), and if it is below the limiting size ("YES at Step S3), application registration/control section 612 performs the uploading process and the web server 6 receives the application (Step S4). The application registration/control section 612 links the user with the application types to form a control information(Step S5) and record the control information in the application control information recording section 106 of the database 10. On the display section 32 of the application provider terminal 3, as shown in the image view of Fig. 12, upload result display screen 321 for displaying the uploaded application information is displayed (Step S6).

### <Registration of computer resource>

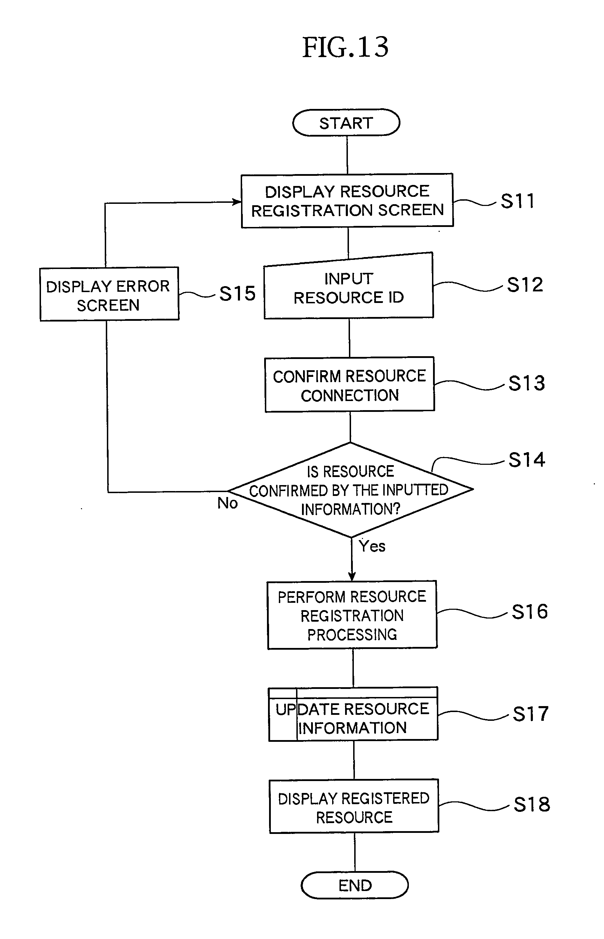

Fig. 13 is a flow chart showing procedures of registration of personal computer etc. owned and controlled by the resource provider, as a resource provider terminal 2.

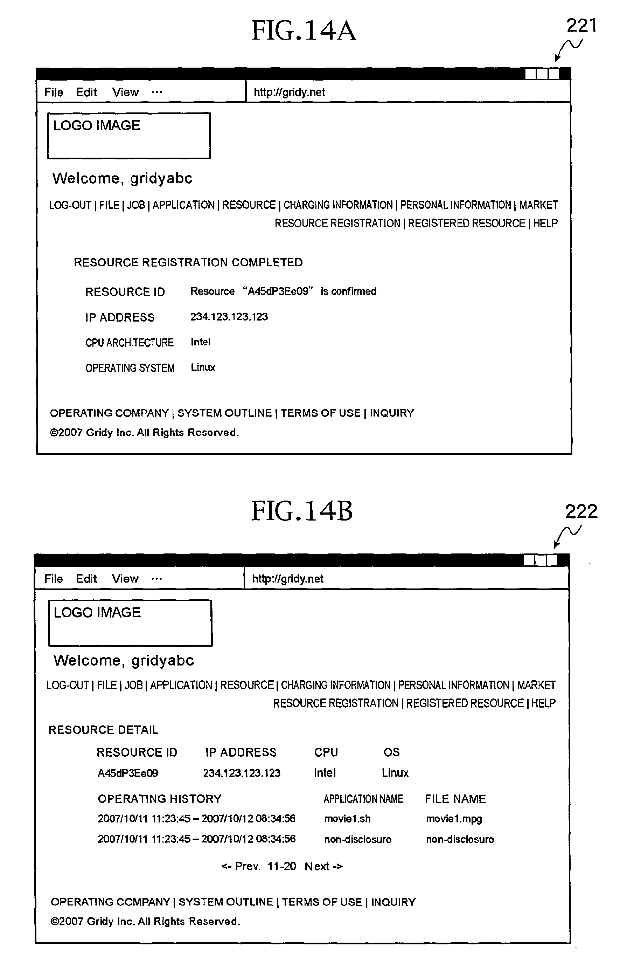

The resource provider connects the resource provider terminal 2 to the Internet 5, and displays registration screen (not shown) on the display section 22 of the resource provider terminal 2 (Step S11) and inputs ID information previously assigned from the application/data transaction management system 1 of the administrator side, on the ID input column (not shown) of the upload screen (not shown) (Step S12). Then, the resource provider terminal 2 confirms that oneself is being connected to the Internet 5 (Step S13) and the owned resource acquiring section 202 confirms the information of one's owned computer resource such as specification of CPU, memory size of RAM, ROM, HDD etc. If such information is not confirmed ("NO" at Step S14), error is indicated on the display section 22 (Step S15). If such information is confirmed ("YES" at Step S14), a resource information notification section 201 sends the confirmed information to the web server 6, and the resource registration/control section 610 of the web server 6 registers the received information (Step S16) and updates the resource information (Step S17). The registered information display screen 221 for displaying the registered resource information of the resource provider terminal 2, is displayed on the display section 22 of the resource provider terminal 2 as shown in the image view of Fig. 14A (Step S18). When the resource provider terminal 2 is used for the job execution (described later), an operational history display screen 222 shown in the image view of Fig, 14B is displayed on the display section 22.

The resource registration/control section 610 of the web server 6 regularly acquires computer resource information (specification of CPU, information related to the memory size of RAM, ROM, HDD etc., information related to operational status) from the registered resource provider terminal 2 when the application/data transaction management system 1 of the administrator side is operated and periodically updates the resource information at Step S17.

When a particular resource provider terminal 2 is to be deleted i.e. deleting the registration as a resource provider terminal 2, the registration screen (not shown) is to be displayed on the display section 22 of the resource provider terminal 2 and the registration deletion button (not shown) is clicked to request the web server 6 for deleting the registration.

At that time, the resource registration/control section 610 of the web server first confirms the operational status of the resource provider terminal 2 which is being requested for deletion, and if it is confirmed as being inoperative, the registration of the relevant resource provider terminal 2 is removed.

### <Display of login and user information>

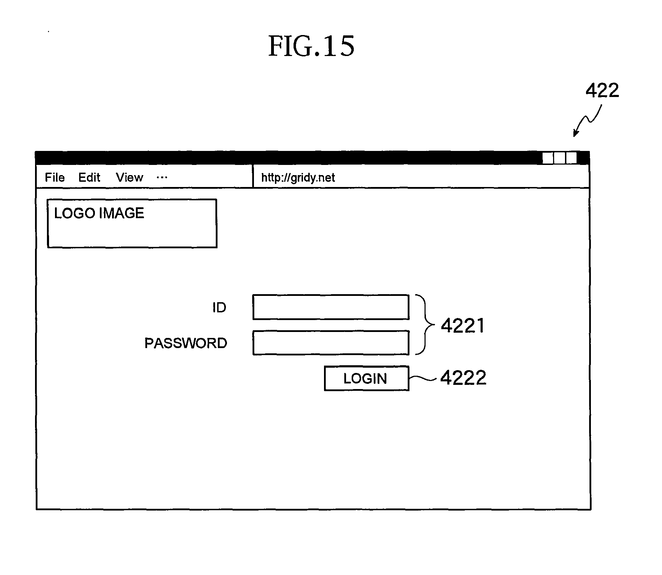

Using the user terminal 4, the registered users make access to the web server 5 of the application/data transaction management system 1 of the administrator side. The login screen 422 shown in the image view of Fig. 15 is displayed on the display section 42 of the user terminal 4. The registered users input the registered ID and password on the input column 4221 of the login screen 422, and when the login button 4222 is clicked, the front page (not shown) is displayed on the display section 42 as long as the ID is correct and within the expiry date.

### <Charging Information>

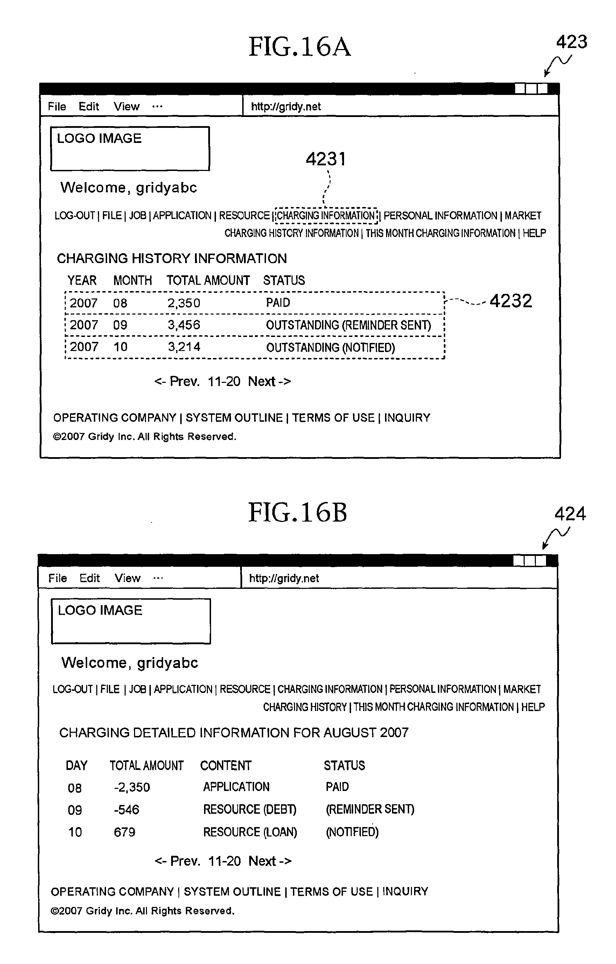

When the charging information display button (refer to 4231 in Fig. 15) on the front page (not shown) displayed on the display section 42 is clicked, charging history display screen is displayed on the display section 42. An image view of charging history display screen 423 is shown in Fig. 16A. As shown in the same figure, on the charging history display screen 423, monthly charging information based on the system utilization by the user recorded in the charging control information recording section 105 of the database 10 is displayed. Further more, on certain month, for instance, button 4232 shown as "August 2007" is clicked, charging detail information display screen 424 shown in the image view of Fig. 16B is displayed on the display section 42 and the charged items incurred on the relevant month will be displayed.

### <Uploading of file>

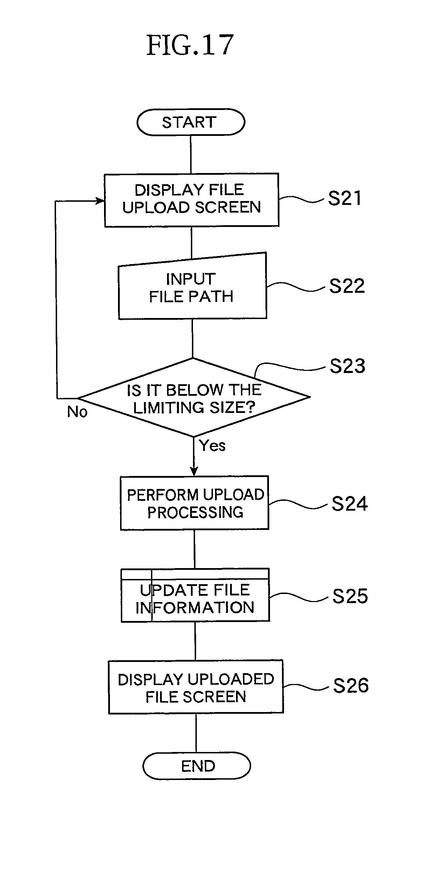

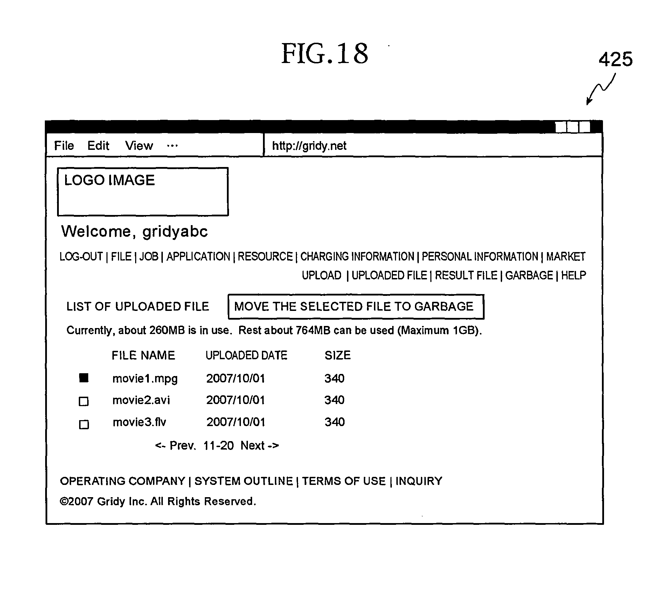

Fig. 17 is a flowchart showing user procedures for uploading the moving image file to the application/data transaction management system 1 of the administrator side. As shown in Fig. 17, when user performs the uploading of one's owned moving image file to the application/data transaction management system 1 of the administrator side, upload screen (not shown) is displayed on the display section 42 of the user terminal 4(Step S21) and path information for the storage location of the moving image file is inputted on the input column (not shown) of the upload screen (Step S22). An information such as file size etc. is sent to the web server 6, and the file analysis section 607 confirms whether the relevant file is below the predetermined limiting size. If the size exceeds the limiting size ("No" at Step S23), it is accordingly shown on the upload screen (not shown), and if the size is below the limiting size ("YES" at Step S23), file receiving section 606 performs the upload processing, the web server receives the file (Step S24), user file control section 602 forms and updates the control information which links the user and the file (Step S25), and the control information is recorded in the file control information recording section 102 of the database 10. The uploaded file is subjected to the data processing (conversion of the file format etc.)described later, and once performed, it is downloaded or recorded in the file recording section 109. The upload result display screen 425 as shown in the image view of Fig. 18, for displaying information of the uploaded file, is displayed on the display section 42 of the user terminal 4 (Step S26).

### <Registration of Job>

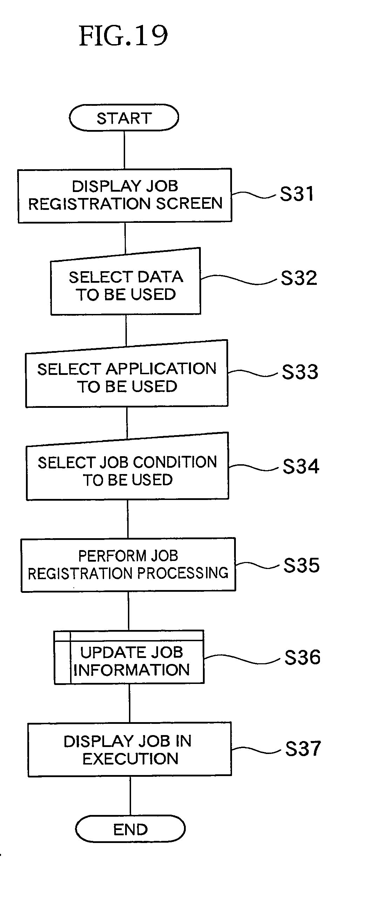

Fig. 19 is a flow chart showing user procedures for performing a job (a unit of work to be performed by the computer; for instance, series of procedures from the time when a command is given to convert the moving image file format and up to the completion of the conversion processing based on such command), at the user terminal 4.

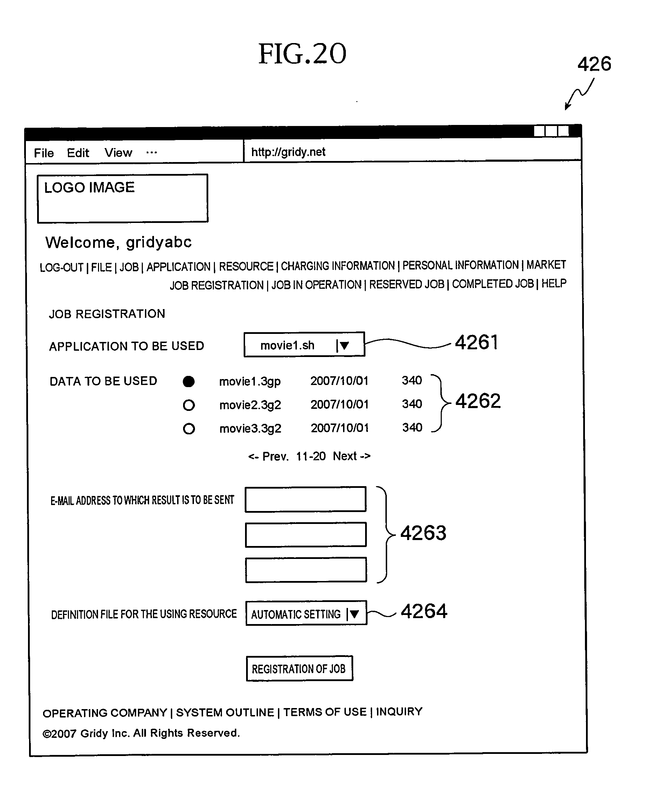

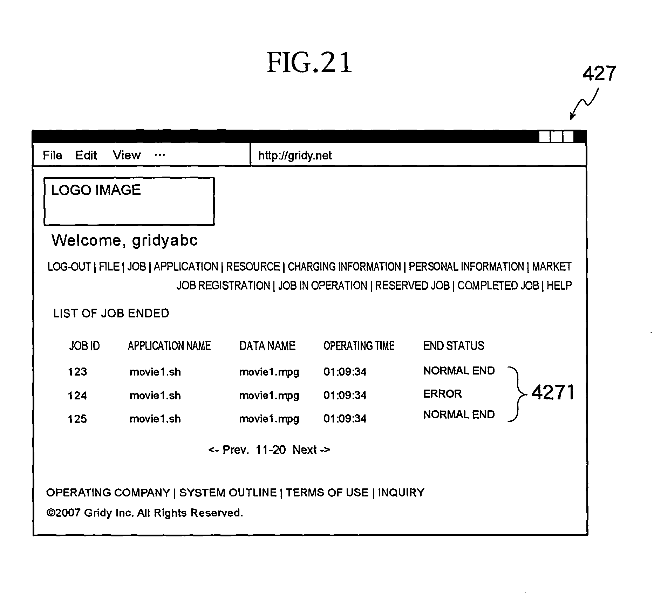

As shown in Fig. 19, when the user executes a job at the user terminal 4, and uses the moving image file for replay, job registration screen 426 as shown in the image view of Fig. 20 is displayed on the display section 42 of the user terminal 4 (Step S31), requested data is selected from the data selected at the data selection column 4262 of the job registration screen 426 (Step S32), requested application is selected from the application displayed at the application selection column 4261 (Step S33), and job condition to be used is selected (Step S34). Further, destination e-mail address is inputted on the input column 4263, and when the job registration button 4264 is clicked in this state, user job control section 603 of the web server 6 performs the job registration processing (Step S35), and the job is executed at the resource provider terminal 2 (described later). Job progress (status) confirmation section 614 of the web server 6 regularly confirms the job progress of the resource provider terminal 2 and updates the confirmed result (Step S36). The confirmed result is sent to the user terminal 4 and the job in execution is displayed sequentially at the display section 42 (Step S367. When job progress confirmation section 614 confirms the completion of the job and such confirmation is sent to the user terminal 4, the end job display screen 427 shown in the image view of Fig. 21 is displayed at the user terminal 4. As shown in the same figure, application name, data name, operating time, end status, of the job in which execution command is given at the user terminal 4, is displayed on the end job display column 4271 of the end job display screen 427.

### <Job execution procedures>

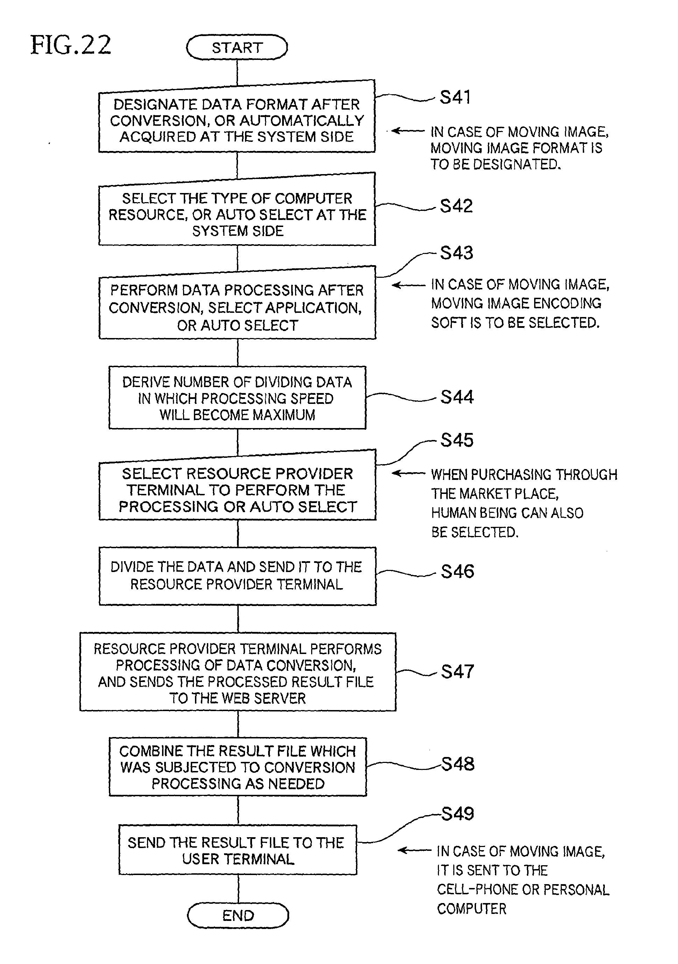

Fig. 22 is a flow chart describing the job execution procedures in the application/data transaction management system 1A of the embodiment of this present invention.

Here, as an example of a job, a situation where the moving image file is sent to one relevant user terminal 4 (i.e. make user terminal 4 perform the download) after the moving image file recorded in the file recording section 109 of the data base 10 is converted into a file format which conforms to the application which registered in the one relevant user terminal 4, is to be considered.

As shown in Fig. 22, where the job execution command is being given from the user terminal 4 (i.e. a situation where the job registration button 4264 is clicked after the procedures of Step S31 to Step S34), the data format of the moving image file is being selected(or an automatically selected at the application/data transaction management system 1 of the administrator side) (Step S41), the type of computer resource is being selected (or automatically selected by the application/data transaction management system 1 of the administrator side) (Step S42), and the type of application which performs the processing (replay etc.) of the moving image file is being selected(or automatically selected by the application/data transaction management system 1 of the administrator side) (Step S43).

In the embodiment of this present invention, a moving image file is divided, and multiple divided moving image files are to be processed concurrently in the multiple resource provider terminals 2. Therefore, a file analysis section 607 of the web server 6 derives the number of file after the division, or a data amount of each file after the division so that the processing speed will become maximum (Step S44). In particular, the file receiving section 606 acquires a moving image file regarded as a data selected at the data selection column 4262 of the job registration screen 426 from the file recording section 109 of the database, and a file analysis section 607 acquires information of the data type (mpg, wmv etc.) and data amount of the relevant moving image file. The file analysis section 607 selects, based on the acquired information mentioned above and the acquired information at Step S42, S43, a computer resource (for example, type of CPU or specification, memory size of RAM, ROM, HDD etc.) which is suitable for the processing of the relevant moving image file.

And, a resource information acquiring section 701 of the central server 7 acquires current computer resource information of the resource provider terminal 2. Therefore, it is possible to select resource provider terminal 2 which is currently operated and has a computer resource suitable for the processing of the various data and application, thereby utilization rate of the computer resource can be further improved and good performance of the server side can be further maintained.

And, the resource information analysis section 702 and the job per resource appointing section 703 both select a resource provider terminal 2 in which the processing of the moving image file is to be performed, based on the acquired computer resource information and the result of Step S44 (Step S45). For instance, at Step S44, it is derived that a processing speed will become maximum when moving image file is divided equally into three parts and each part is processed by a computer resource which has a specification of CPU of more than 3 Pentium (Registered Trademark) and having a main memory (RAM) of more than 512MB, and when three resource provider terminal 2 having a computer resource of such condition mentioned above which are currently operated are the resource provider terminals 2₁, 2₂ and 2₃, the resource information analysis section 702 selects the three resource provider terminals 2₁, 2₂ and 2₃.

By selecting the provider terminal 2 and dividing the moving image file so that the processing time of the various data can be shortened as much as possible, it is possible to execute processing of the moving image file quickly and accurately, thereby, enhancing the utilization of the computer resource and maintaining good performance of the server side. Also, by collating the conditions of the types of moving image file, the data amount etc. with the computer resource conditions of each resource provider terminal 2, and by selecting the resource provider terminal 2 so that the processing time can be shortened as much as possible as a result of this collation, an accurate and speedy processing of the moving image file can be realized in a condition where there is an excellent compatibility between the moving image file and the computer resource conditions.

Further more, a file dividing section 608 of the web server 6 divides the moving image file, and the file/application transmitting control section 609 sends the divided file to the resource provider terminal 2 (Step S46). In the aforementioned example, a moving image file is equally divided into three parts, and the divided files are sent to the resource provider terminals 2₁, 2₂ and 2₃. Therefore, it is possible to perform parallel processing of the divided moving image file at the resource provider terminal 2 which is suitable for the moving image file processing. Accordingly, a processing of the moving image file can be performed with expedition and accuracy, enhancing the utilization of the computer resource and maintaining good performance of the server side.

A job progress control section 704 of the central server 7 makes the resource provider terminal 2 to which the files are sent, to execute the job, and controls the progress. Here, the job progress control section 704 makes the resource provider terminals 2₁, 2₂ and 2₃ to perform the conversion processing of the divided file into a file format adapted to an application registered in one user terminal 4. In the resource provider terminal 2, a job receiving section 205 acquires the divided file and a job execution section 206 performs the file format conversionprocessing, and a job progress notification section 203 sends the job progress to the job progress control section 704. The job progress control section 704 sends the received job progress to the job progress confirmation section 614. When the processing is suspended at one of the resource provider terminals 2, a job restoration section 705 restores the job.

When the job result collecting section 706 of the central server 7 receives the completion command of the file format conversion processing from the resource provider terminal
2₁, 2₂ and 2₃, a job result collecting section 706 sends the signal of the end of the processing to the web server 6, and a job result file receiving section 615 of the web server 6 receives the already processed file sent from the resource provider terminal 2₁, 2₂ and 2₃ (of the job result notification section 207) (Step S47). Then, the job deletion section 208 of the resource provider terminal 2 deletes the relevant job.

A result file analysis section 616 of the web server 6 analyzes whether there is an error in the processed file received from the resource provider terminal
2₁, 2₂ and 2₃ and as a result of this analysis, if there is no error found in any of the files, the result file combining section combines (links together) all of the processed files if necessary, and one moving image file having a file format adapted to the application registered in one user terminal 4, is formed (Step S48), and thereafter, is transmitted to the user terminal 4 (Step S49). After the transmission of the moving image file, a result display section 618 of the Web server 6 receives the information from a job result notification section 707 and displays the result of the job execution at the display section 42 of the user terminal 4.

### <Calculation and recording of the charging/payment etc.)

When the job is completed through the process of Step S41 to S48, a user result control section 604 of the Web server 6 records the processing matter in a file control information recording section 102, a job control information recording section 103, an application control information recording section 106, a resource control information recording section 107 and a system log information recording section 108 of the database 10. And, a user accounting control section 605, a resource charging control section 611, and an application charging control section 613 of the Web server 6 calculates the fees charged on the user of the user terminal 4, and the payment (fees to be paid) to the provider of the resource provider terminal 2 which incur by the execution of the job, and record them in the charging control information recording section 105 of the database 10.

### <An operation as an e-market place>

The application/data transaction management system 1A of the present embodiment is to form an e-market place. In the e-market place, an electronic commerce is carried out to make the computer resource of a particular resource provider terminal 2 to be utilized for a certain period of time by a particular user terminal 4, and to make the application used at the user terminal 2 to be utilized for a certain period of time.

### <Registration to the e-market place from the resource provider>

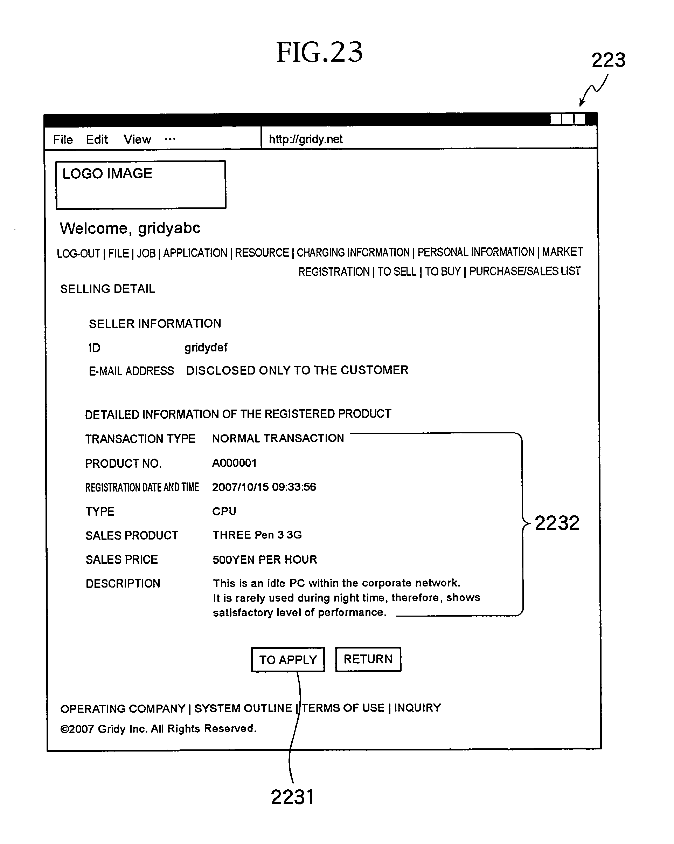

When the resource provider gives an exclusive license to use the one's owned resource provider terminal 2, the resource provider displays the registration screen (not shown) on the display section 22 of the resource provider terminal 2, and inputs CPU specifications of the resource provider terminal 2, memory size of RAM, ROM, HDD etc., price (user fee per unit time), description for explaining the condition of the relevant resource provider terminal etc. When the registration button (not shown) is clicked after the input, a registration content confirmation screen 223 shown in the image view of Fig. 23, is displayed at the display section 22. When the resource provider clicks the application button 2231 of the same confirmation screen 223, the registration is completed, and the resource registration/control section 610 record the content displayed on the content display column 2232 of the registration condition display screen 224 in the resource control information recording section 107 of the database 10.

### <Registration to the e-market place from the user>

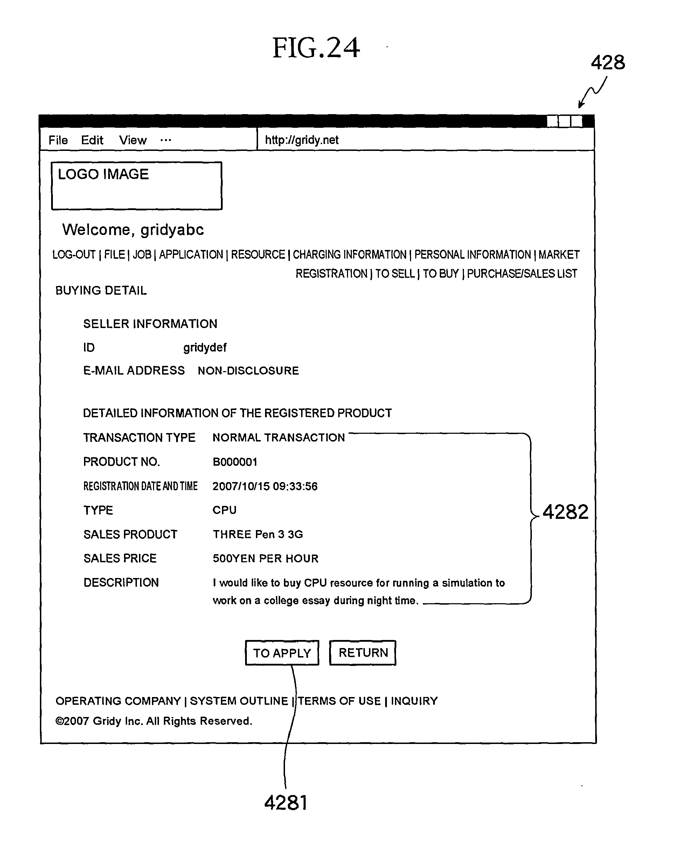

When the user registers the specification etc. of the resource provider terminal 2 to which an exclusive license is requested in the user terminal 4, the user displays the registration screen (not shown) on the display section 42 of the user terminal 4, and inputs the conditions such as requested CPU specification to be used, memory size of RAM, ROM, HDD etc. price (user fee per unit time), and the description explaining the intended use. When the registration button (not shown) is clicked after the input, a registration condition display screen 428 shown in the image view of Fig. 24 is displayed. When the user clicks the application button 4281 of the same confirmation screen 428, the registration is completed. When the registration is completed, a resource registration/control section 610 records the content displayed on the content display column 4282 of the registration condition display screen 428 in the resource control information recording section 107 of the data base 10.

### <Buying and selling of rights through the e-market place>

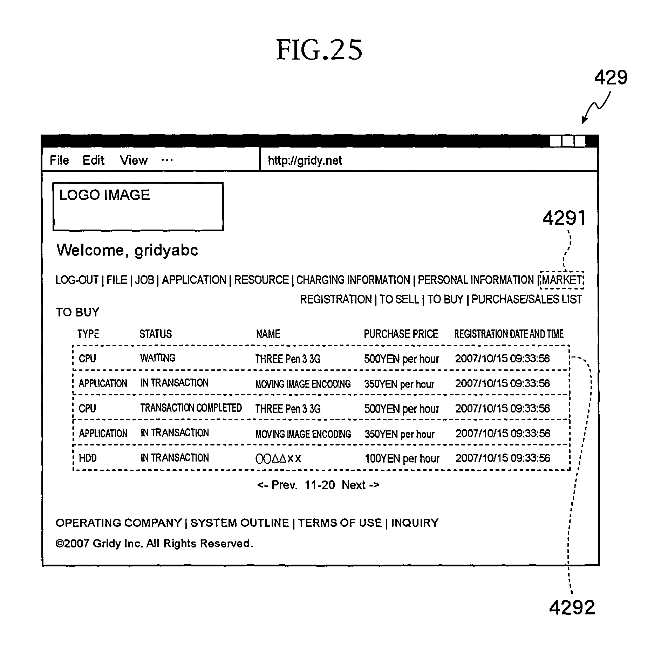

When the user selects from the registered computer resource, one of the registered computer resource that user wants to use, the user clicks an e-market place display button (Please refer to 4291 in Fig. 25) at the front page (not shown) displayed on the display section 42 of the user terminal 4 and the registration condition display screen 429 shown in the image view of Fig. 25 is displayed on the display section 42.

On the registration condition display screen 429, the computer resource information of the registered resource provider terminal 2 registered by the resource provider is displayed and each line is formed with a button. When the user clicks a button, for instance, button 4292 shown in Fig. 25, by using the operation section 41, and then clicks the application button (not shown) after setting the requested date and time of use at the application screen newly displayed, the application is transmitted to the Web server 6. And, when the web server 6 accepts the application, an e-mail confirming the acceptance is automatically sent to the user terminal 4, and the user is able to use the computer resource of the resource provider terminal 2 for a certain period under the requested condition (CPU can be used exclusively for a certain period of time, memory of RAM, ROM, HDD etc. can be used for a certain time period.). Further more, the user is able to use the application provided from the application provider terminal 2 for a certain time period by following the similar procedures.

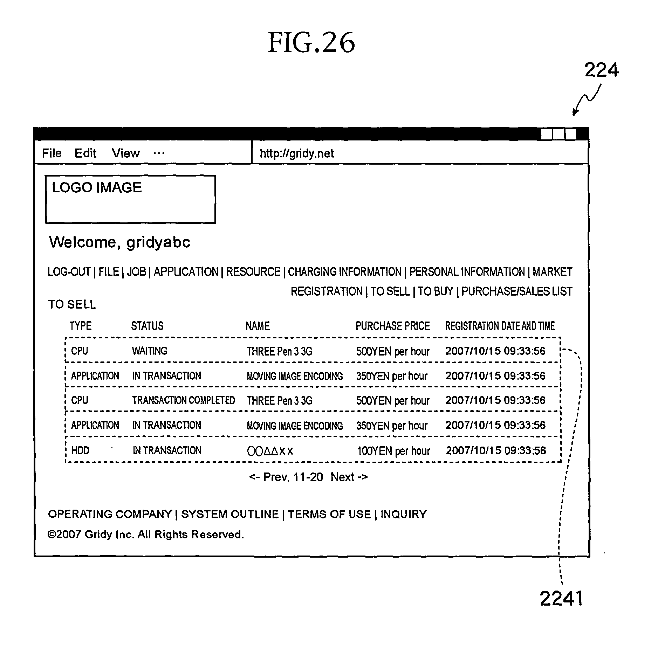

On the other hand, when the resource provider selects ones owned computer resource from the registered requested condition to be used, a registration condition display screen 224 shown in the image view of Fig. 26 is displayed on the display section 22 of the resource provider terminal 2. When the user, by using the operation section 21, clicks one button, for instance, button 2241 shown in Fig. 26, an application screen (not shown) is newly displayed. When the application button (not shown) is clicked after setting the requested date and time to be provided on the application screen, the application is transmitted to the Web server 6. When the Web server 6 receives the application, an e-mail confirming receipt of the application is automatically sent to the resource provider terminal 2, and the resource provider will allow the resource provider terminal 2 to be used for a certain period of time under the requested condition. Furthermore, the application provider can make ones owned application to be used by a specific user terminal 4 for a certain period of time by following the similar procedures.

As a result of the transaction conducted in the e-market place, when the computer resource of the resource provider terminal 2 and the application provided by the application provider terminal 3 are used, a resource registration/control section 610 of the Web server 6, application registration/control section 612 monitors the using condition and record them in a resource control information recording section 107, an application control information recording section 106 of the database 10. And once the use of computer resource and application is terminated, a resource charging control section 611,and an application charging control section 613 of the Web server 6 determine the charge fee and the payment, and record them in the charging control information recording section 105 of the database 10.

In the present embodiment, the system comprises a central server 7 for controlling the operational state of the predetermined structural requirement constituting the system and communicating with the resource provider terminal 2 through the Internet 5 and the Web server 6, and forms a grid computing system and exchanges moving images files between the user terminal 4 and the system via the Internet 5. Accordingly, the personal computer existing at the office, local government, university or at home etc. and electronic computer such as server computer etc. can be utilized as a resource provider terminal 2, being able to process massive amount of data with high speed. Therefore, the utilization rate of the computer resource can be enhanced, and time and effort for purchasing and controlling the server can be restrained, and good performance of the server side can be maintained regardless of the increase or decrease in the data amount. Furthermore, the application registration control section 612 controls the application type which can be applied to the moving image file, therefore, moving image file can be used regardless of whether or not the application is mounted in the user terminal 4. And, when moving image file is received from the user terminal 4, the data format of the moving image is converted into multiple data formats, and when there is a request for acquiring various data from the user terminal to the application/data transaction management system, a file analysis section 607 is provided to select the various data having data format applicable to the application registered in the user terminal. Thereby, even when the moving image file which is requested to be acquired from a specific user terminal 4, has a data format different from the data format which can be used in the relevant user terminal 4, it can still be used in the relevant user terminal 4. Accordingly, the moving image files can intercommunicate regardless of the difference in the data format which can be used for each client, being able to provide an application/data transaction management system 1A which is highly convenient for the user.

In the present embodiment, the processing objects e.g. various data and applications are subjected to the moving image file, but it is not limited to the moving image file. Any data such as a still image, a sound or a text can be used as long as they can be communicated through the network.

Also, in the present embodiment, "application control means", "data conversion/selection means" and "data dividing means" are provided in the web server 6 and "resource control means" "resource analysis selection means" are provided in the central server 7, however, it can be modified in which these structure can be adopted in any of the configurations in the application/data transaction management system 1A.

The present embodiment is just an example of the present invention, and the present invention is not only limited to this embodiment.

## Claims

1. An application/data transaction management system for creating a grid computing system and communicating various data between user terminals used by the users who use various data via a network, comprises;
a central server for communicating with a resource provider terminal via the network, and controlling the operating condition of a predetermined configuration requirement which constitutes a system,
a data base in which various data are stored,
an application control means for controlling a type of application applied to the various data,
a data conversion/selection means for converting a data format of the various data into a multiple data formats when the application/data transaction management system receives the various data from the user terminal and selecting the various data having a data format which conforms to the application registered in the user terminal when there is a request for acquiring the various data from the user terminal to the application/data transaction management system.

2. The application/data transaction management system according to claim 1, wherein the application/data transaction management system has resource control means for controlling the operational status of the resource provider terminal which performs predetermined processing of at least either one of the various data or the application and controlling the computer resource condition.

3. The application/data transaction management system according to claim 1 or 2, comprises;
resource analysis selection means for analyzing information such as operational status of each resource provider terminal and computer resource condition when the various data are divided and each divided various data is processed separately at the multiple resource provider terminals and selecting the resource provider terminal to which the various data are to be processed based on the result of the analysis; and
data dividing means for dividing the various data based on the analysis of the resource analysis selection means and transmitting the divided various data to the multiple resource provider terminals selected by the resource analysis selection means.

4. The application/data transaction management system according to claim 3, wherein the resource analysis selection means divides the various data and selects the resource provider terminal so that the processing time of the various data will be minimized as much as possible.

5. The application/data transaction management system according to claim 3 or 4, wherein the recourse analysis selection means collates the conditions such as type of various data, data amount, with the computer resource conditions of each resource provider terminal and selects the resource provider terminal so that the processing time will be minimized as much as possible as a result of the collation.

6. The application/data transaction management system according to either one of the claims 1 to 5, wherein the various data is a moving image file and the application is designed to perform an encoding of the moving image file.

7. The application/data transaction management system according to either one of the claims 1 to 6, forms at least one of e-market places, an e-market place for making the computer resource of a specific resource provider terminal to be utilized by a specific user terminal for a certain prescribed period, or an e-market place for making the application which is used in the user terminal to be utilized for a certain prescribed period.

8. A program for making a computer function as the application/data transaction management system according to claims 1 to 7.
